# EUROPEAN PATENT SPECIFICATION

(11) **EP 2 953 800 B1**
(45) Date of publication and mention of the grant of the patent: **07.08.2019**
(21) Application number: 14703734.5
(22) Date of filing: 28.01.2014
(51) Int. Cl.: B60C 9/11, B60C 9/02, B60C 9/00, B60C 9/08

(54) **PNEUMATIC TIRE CARCASS HAVING AIR BLOCKING STABILIZING FABRIC SYSTEM**
LUFTREIFENKARKASSE MIT LUFTBLOCKIERENDEM UND STABILISIERENDEM FASERSYSTEM
CARCASSE DE BANDAGE PNEUMATIQUE COMPRENANT UN SYSTÈME DE TISSU STABILISANT À BLOCAGE D'AIR

(30) Priority: 06.02.2013 US 201361761471 P
(43) Date of publication of application: 16.12.2015
(73) Proprietor: Milliken & Company, Spartanburg, South Carolina 29303 (US)
(72) Inventor: PESCHEK, Johann, B-9000 Gent (BE); DUYTSCHAEVER, Yves, B-9600 Ronse (BE); CATTEAU, Franck, B-59117 Wervicq-Sud (BE); EL-MAJID, Ines, B-9000 Gent (BE); NAIR, Sujith, Greer, South Carolina 29650 (US); PUTHILLATH, Padmakumar, Greer, South Carolina 29650 (US); ULLAL, Purushothama K., Singapore 119968 (SG)
(74) Representative: Hoffmann Eitle
(86) International application number: PCT/US2014/013302
(87) International publication number: WO 2014/123715

(56) References cited:
- EP-A1- 1 491 363
- EP-A2- 0 396 494
- FR-A1- 2 536 017
- US-A1- 2012 012 238

## Description

### FIELD OF THE INVENTION

The present invention generally relates to fiber reinforced rubber articles.

### BACKGROUND

Reinforced rubber goods are used in a wide variety of consumer and industrial applications. The performance of reinforced molded rubber goods depends on the adhesion of the reinforcement to the rubber and for air-blocking properties.

In some of these rubber products (tires, air springs) the manufacturing process requires a fibrous layer with unidirectional stretch capabilities to allow for the expansion during the building process. It is very critical for the quality of these rubber products that the stretching of the fibrous layer is extremely uniform and the spacing of the individual fibrous elements stays regular.

It would be desirable if the air sealing component of the tire product would stabilize the fibrous reinforcement and simultaneously provide the necessary stretch capability.

### BRIEF SUMMARY

A reinforced rubber article containing a rubber article, a fibrous reinforcement layer and a polymer with air sealing properties. The fibrous layer contains a film with stretch and air sealing properties and a layer of imbedded or bonded 1) monoaxially drawn tape elements or 2) multifilament yarn such as PET, PA, Aramid or similar. Methods of forming the reinforced rubber article are also disclosed.

Independent claims 1 and 11 refer to a pneumatic tire carcass.

Independent claims 7 and 15 refer to a process of forming a pneumatic tire carcass.

### BRIEF DESCRIPTION OF THE DRAWINGS

Figure 1 is a cutaway partial view of a pneumatic radial tire.
Figures 2A and 2B are illustrations of two embodiments of air-blocking stabilizing fabric systems.
Figure 3 illustrates schematically an embodiment of an exemplary tape element having one layer.
Figure 4 illustrates schematically an embodiment of an exemplary tape element having two layers.
Figure 5 illustrates schematically an embodiment of an exemplary tape element having three layers.
Figure 6 illustrates schematically an embodiment of an exemplary tape element having voids and surface crevices.
Figure 7 is a micrograph at 50,000X magnification of a cross-section of one embodiment of the fiber containing voids.
Figure 8A is a micrograph at 20,000X magnification of a cross-section of one embodiment of the fiber containing voids and void-initiating particles showing some diameter measurements of the voids.
Figure 8B is a micrograph at 20,000X magnification of a cross-section of one embodiment of the fiber containing voids and void-initiating particles showing some length measurements of the voids.
Figure 9 is a micrograph at 1,000X magnification of a surface of one embodiment of the fibers having crevices.
Figure 10 is a micrograph at 20,000X magnification of a surface of one embodiment of the fibers having crevices.
Figure 11 is a micrograph at 100,000X magnification of a surface of one embodiment of the fibers having crevices.
Figure 12 is a face view of a segment of a first exemplary warp-knit weft inserted fabric construction for use as a stabilizing fabric in a tire carcass;
Figure 13 is a face view of a segment of a second exemplary warp-knit weft inserted fabric construction for use as a stabilizing fabric in a tire carcass;
Figure 14 is a back view of the segment of warp-knit, weft inserted fabric construction of Figure 13;
Figure 15 is a schematic pattern view illustrating a pattern for placement of machine direction yarns in a warp-knit, weft inserted fabric construction incorporating stabilizing yarns for placement in bead zones of the tire carcass.

### DETAILED DESCRIPTION

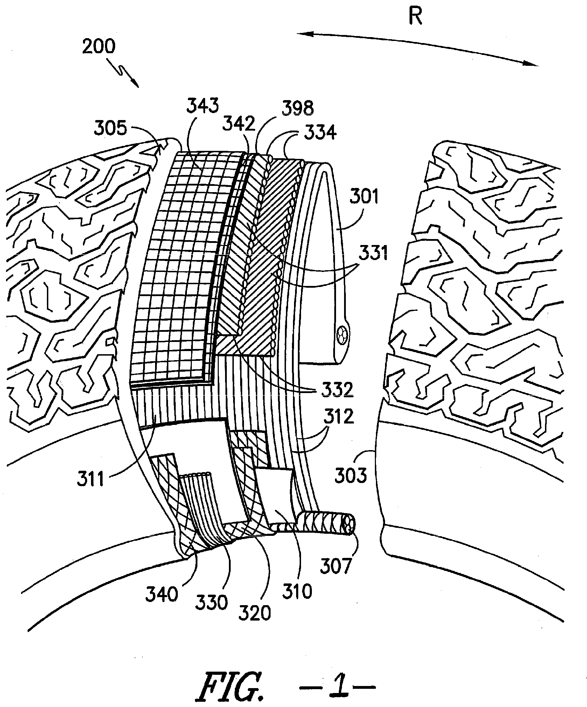

Referring to Figure 1, there is shown one embodiment of a reinforced rubber article 200 being a tire, comprising side walls 303 joined to a tread 305 by shoulders. The tire 200 includes a carcass 301 covered by the tread 305. In Figure 1, the tire 200 is a radial tire. However, the present invention is not limited to radial tires and can also be used with other tire constructions. The carcass 301 is typically formed from one or more plies of stabilizing fabric 312 terminating at the inner periphery of the tire in metal beads 307, with at least one belt ply 334 located circumferentially around the stabilizing fabric 312 in the area of the tread 305. The carcass 301 is constructed so that the reinforcing yarns 311 within the stabilizing fabric 312 are running substantially radially of the intended direction of rotation R of the tire 200. The belt plies 334 are formed with relatively inextensible warp materials 331, such as steel cord reinforcing warps, which run in the intended direction of rotation R of the tire or, more usually, at a slight angle thereto. The angle of the inextensible warp materials 331 can vary with the method of construction or application. The breakers 330 extend across the width of the tread 305 of the tire terminating in edges 332 in the area of the tire 200 where the tread 305 meets the sidewall 303.

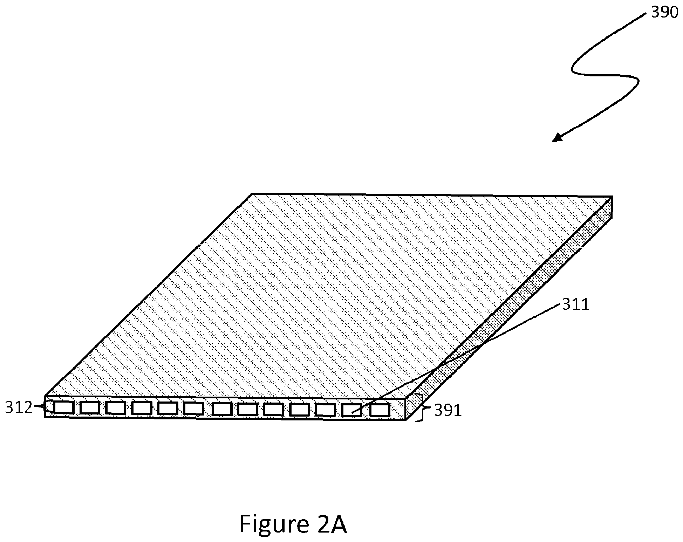

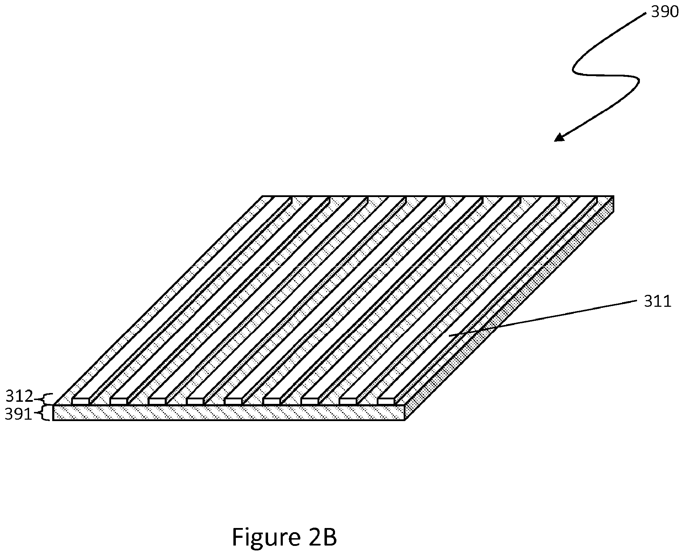

A cap ply layer 343 is located between the belt plies 334 and the tread 305. The cap ply layer 343 shown is formed from a cap ply tape 342 wound around the tire cord 312 in the rolling direction of the tire extending over the edges 332 of the belt plies 334. Additionally, the cap ply tape 342 in Figure 2 can be wound around the tire cord 312 a plurality of times to reduce the unbalancing effect in the tire 200 caused by the overlap splice. Alternatively, the cap ply layer 343 may be formed from a cap ply tape 342 which extends over the edge 332 of the belt plies 334 or the cap ply layer 343 may be formed from a cap ply tape 342 which is wound circumferentially around the carcass 301 of the tire 200 in a flat helical pattern. Some suitable cap ply fabrics are described in US Patents 7,252,129, 7,614,436, and 7,931,062, each of which are incorporated herein by reference in their entirety.

On top of the bead 307 is the bead apex 310 and surrounding at least partially the bead 307 and the apex 310 is a flipper 320. The flipper 320 is a fabric layer disposed around the bead 307 and inward of the portion of the turn-up end 330. A chipper 340 is disposed adjacent to the portion of the ply 330 that is wrapped around the bead 307. More specifically, the chipper 340 is disposed on the opposite side of the portion of the ply the "turn-up end" 330 from the flipper 320. The sidewall may also contain other non-shown fabric layers, for example chafer fabrics, toe protector fabrics, or fabrics wrapping around the bead, extending from the bead up the side of the sidewall, extending from the tread down the sidewall, in the shoulder area, or completely covering the sidewall. Any fabric extending between the bead and the tread is defined herein as a "sidewall fabric". This includes fabrics that also extend around the bead to the inside of the tire such as a flipper fabric, as long as at least part of the fabric is located between the bead and the tread.

A tire carcass 301 is required to have substantial strength in the radial direction running from bead to bead transverse to the direction rotation during use. To provide this strength, the stabilizing fabric 312 (also sometimes referred to as tire cord) has typically been a woven fabric with substantially inextensible pre-stressed high tenacity yarns running in the warp direction (also known as the "machine direction") which are drawn and tensioned during the fabric formation and/or finishing process. This fabric is then cut in the cross-machine direction (i.e. transverse to the warp yarns). Individual pieces of the fabric are then rotated 90 degrees and are assembled to one another for placement in the carcass 301 such that the high strength warp yarns are oriented in the desired radial direction between the beads. Thus, in the final construction, the weft yarns are oriented substantially circumferentially (i.e. in the direction of tire rotation.) This stabilizing fabric is typically laid and adhered to a tire inner liner formed from a thick butyl rubber material to form an air sealing layer.

It has been suggested to form the stabilizing fabric 312 such that the reinforcing yarns 311 (also sometimes referred to as reinforcing cords) in the weft or cross-machine direction to eliminate the slice, turn, and splice steps required of traditional stabilizing fabrics. In one embodiment, the carcass stabilizing fabric is formed is a warp knit, weft inserted fabric having weft insertion yarns formed from the relatively inextensible reinforcing cords. Alternatively, the carcass stabilizing fabric may be a woven fabric having weft yarns formed from relatively inextensible reinforcing cords.

Alternatively, the carcass stabilizing fabric may be a non-woven fabric having yarns formed from relatively inextensible reinforcing cords in the weft or cross machine direction such as in a laid scrim or unidirectional fabric. More information about this stabilizing having relatively inextensible reinforcing cords in the weft direction of the textile may be found in US Patent Application Serial Number 12/836,256 filed on July 14, 2010, which is incorporated herein by reference in its entirety.

A reinforced rubber article 200 may also be in the form of a fabric reinforced hose. One of the most widespread and most suitable conventional hose is the so-called "mesh-reinforced" type, in which the stabilizing fabric (containing reinforcing yarns) is formed by yarns spirally wound on the flexible hose forming two sets of yarns, the first in parallel and equidistant rows and superimposed on an equal number of transverse threads along likewise parallel and equidistant lines which are arranged symmetrically with respect to the axis of the tubular body of the hose so as to form a fabric "mesh" with diamond-shaped cells. The stabilizing fabric 312 is typically embedded into rubber 220 to create a reinforced air-blocking fabric. In addition to hoses, the fibers and fibrous layers may be used to reinforce any suitable rubber article including belts such as power transmission belts, printers blankets, and tubes.

Some other reinforced rubber products 200 include printer blankets and transmission belts. In offset lithography the usual function of a printing blanket is to transfer printing ink from a printing plate to an article such as paper being printed whereby the printing blanket comes into repeated contact with an associated printing plate and the paper being printed. Printer blankets typically include a fabric embedded into rubber. Transmission belts and other types of belts also contain reinforced rubber with fibers.

Pneumatic springs commonly referred to as air springs, have been used with motor vehicles for a number of years to provide cushioning between movable parts of the vehicle, primarily to absorb shock loads impress on the vehicle axles by the wheels striking an object in the road or falling into a depression. These air springs usually consist of a flexible elastomeric sleeve or bellows containing a supply of compressed air or other fluid and having one or more pistons located within the flexible sleeve to cause compression and expansion as the vehicle experiences the road shocks. The pistons cause compression and expansion within the spring sleeve and since the sleeve is of a flexible material permits the pistons to move axially with respect to each other within the interior of the sleeve. The ends of the sleeve usually are sealingly connected to the pistons or end members and have one or more rolled ends which permit the end members to move axially with respect to each other between a jounce or collapsed position and a rebound or extended position without damaging the flexible sleeve.

It is desirable that a damping mechanism or device be used in combination with such air springs to provide damping for controlling the movement of the air springs. In one embodiment, the rubber reinforced article is used in an air spring. In some embodiment, the rubber reinforced article is used as a spacer for the piston or bead plate of an air spring assembly.

In each of these rubber reinforced products, carcass of a tire, printers blanket, air spring, hose, the stabilizing fabric is typically adhered to a thick rubber layer which gives the product its air sealing characteristics. It would be desirable to combine the functionality of the fabric and rubber into one ply to reduce labor and materials. The air-blocking stabilizing fabric system of the invention serves to do that.

Referring now to Figures 2A and 2B, there is shown two embodiments an air-blocking stabilizing fabric systems. The systems contains a stabilizing fabric 312 containing reinforcing yarns 311 and an air-blocking layer 390. In one embodiment shown in Figure 2A, the air-blocking layer is a coating on the stabilizing fabric 312. In another embodiment shown in Figure 2B, the air-blocking layer 390 is a separate layer attached to the stabilizing layer 312.

The stabilizing fabric 312 is formed from reinforcing yarns 311 (and other yarns) preferably such that the reinforcing yarns 311 in the stabilizing fabric 312 are in the cross-machine or weft direction. The reinforcing yarns 311 may be any suitable yarn or fiber for the end use. "Yarn" used herein is defined as an elongated body. The yarn may have any suitable cross-section such as circular, multi-lobal, square or rectangular (tape), and oval. In one embodiment, the yarns are tape elements. The tape elements may have a rectangular or square cross-sectional shape. These tape elements may also be sometimes referred to as ribbons, strips, tapes, tape fibers, and the like.

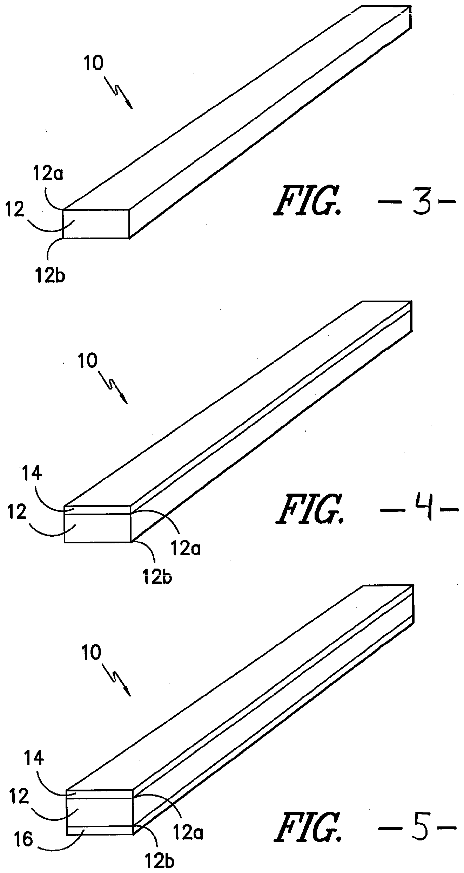

One embodiment of the yarn being a tape element 10 is shown in Figure 3. In this embodiment, the tape element 10 contains a first layer 12 having an upper surface 12a and a lower surface 12b. In one embodiment, the tape element 10 has a rectangular cross-section. The tape element is considered to have a rectangular or square cross-section even if one or more of the corners of the rectangular/square are slightly rounded or if the opposing sides are not perfectly parallel. Having a rectangular cross-section is preferred for some applications for a variety of reasons. Firstly, the surface available for bonding is greater. Secondly, during a de-bonding event the whole width of the tape is under tension and shear points are significantly reduced or eliminated. In contrast, a multifilament yarn has very little area under tension and there are regions of varying proportions of tension and shear along the circumference of the fiber. In another embodiment, the cross-section of the tape element 10 is a square or approximately square. Having a square cross section could also be preferred in some cases where the width is small and the thickness is high, thereby stacking more tapes in a given width thereby increasing the load carrying capacity of the entire reinforcement element.

In one embodiment, the tape elements 10 have a width of between about 0.1 and 6 mm, more preferably between about 0.2 and 4 mm, and more preferably between about 0.3 and 2 mm. In another embodiment, the tape elements have a thickness of between about 0.02 and 1 mm, more preferably between about 0.03 and 0.5 mm, and more preferably between about 0.04 and 0.3 mm. In one embodiment, the tape elements have a width of approximately 1 mm and a thickness of approximately 0.07 mm.

The first layer 12 of the tape element 10 may be any suitable orient-able (meaning that the fiber is able to be oriented) thermoplastic. Some suitable thermoplastics for the first layer include polyamides, co-polyamides, polyesters, co-polyesters, polycarbonates, polyimides, and other orient-able thermoplastic polymers. In one embodiment, the first layer contains polyamide, polyester, and/or co-polymers thereof. In one embodiment, the first layer contains a polyamide or polyamide co-polymer. Polyamides are preferred for some applications as it has high strength, high modulus, high temperature retention of properties, and fatigue performance. In another embodiment, the first layer contains a polyester or polyester co-polymer. Polyesters are preferred for some applications as it has high modulus, low shrink and excellent temperature performance.

In one embodiment, the first layer 12 of the tape element 10 is a blend of polyester and nylon 6. The polyester is preferably polyethylene terephthalate. Polyester is employed because of its high modulus and high glass transition temperature which has resulted in the employment of polyester in tire cords and rubber reinforcement cord, primarily due to its flat-spotting resistant nature. Nylon 6 is employed for multiple reasons. It is easier to process than Nylon 6 6. One of the main reasons to incorporate nylon 6 in these embodiments is to function as an adhesion promoter. Nylon 6 has surface groups to which the resorcinol formaldehyde latex can form primary chemical bonds through the resole group. This blend is a physical blend, not a co-polymer and polyester and nylon 6 are immiscible in each other. In one embodiment, powder or pelts of polyester and nylon 6 are simply mixed in the un-melted state to form the blend that will then be feed to an extruder. The extruded tape elements from this physical blend provide good adhesion to rubber and a high modulus.

Also, Nylon 6 polymerization results in a certain quantity of unreacted monomer lactam which acts as a co-monomer resulting in the miscibility of polyester and nylon 6. The methylene - ester interactions could enable binary blends to tolerate large differences in methylene content before phase separation could occur. In blends containing large differences in the methylene group (as in this case) entropically driven miscibility could occur if the segmental interaction parameter of the blend is lesser than a critical value. Slight phase separation and crystallization of the phase separation elements cannot be avoided; however majority of the tape element seems to be homogeneously miscible. Nylon 6 6 is not preferred to be used because of large phase separations at relatively low volume fractions of nylon 6 6 in polyester. This could be due to several reasons. Nylon 6 6 has a higher degree of polymerization as compared to nylon 6. Secondly the crystallization rate of nylon 6 6 is much greater than nylon 6. This is due to the fact that nylon 6 6 with its symmetrical arrangement can be incorporated into crystal lattice with much greater ease than nylon 6 chains which must be packed in anti-parallel chains to favor complete hydrogen bonding.

There is also a unique reason for why the particular process employed is beneficial to extrude and draw the blended polymer. As mentioned above slight amount of phase separation cannot be avoided. The element may be un-drawable and un-extrudable if the size of the extrudate is too small as is the case with monofilament and multifilament spinnerets holes. The reason for why this is not a problem in this particular process is because of its resemblance to a film draw process where the slotted die openings are so wide that it is able to tolerate a small degree of phase separation and crystallization of these phases without yielding completely disconnected regions.

In one embodiment, the blend of polyester and nylon 6 contains between about 50 and 99%wt polyester and between about 50 and 1% wt nylon 6. More preferably, the blend of polyester and nylon 6 contains between about 60 and 95%wt polyester and between about 40 and 5% wt nylon 6. Most preferably, the blend of polyester and nylon 6 contains between about 70 and 90%wt polyester and between about 30 and 10% wt nylon 6. The weight ratios outside the specified ranges would lead to excessive phase separation and crystallization in the extrudate quench tank rendering the element disconnected from the main extrudate. Weight ratios beyond these regions need special compatibilizers such as excess lactam monomers and co-polyesters.

In one embodiment, the tape elements preferably have a draw ratio of at least about 5, a modulus of at least about 2 GPa, and a density of at least about 1.2 g/cm³. In another embodiment, the first layer has a draw ratio of at least about 6. In another embodiment, the first layer has a modulus of at least about 3 GPa or at least about 4 GPa. In another embodiment, the first layer has a density of at least about 1.3 g/cm³ and a modulus of about 9 GPa. A first layer having a high modulus is preferred for better performance in applications such as tire cord, cap-ply, overlay or carcass ply for tires. Lower density for these tape elements would be preferred so as to yield a lower weight. Voided fibers would generally tend to have lower densities than their un-voided counterparts.

In one embodiment, the tape element contains a second layer such as shown in Figure 4. Figure 4 shows a tape element 10 having a first layer with an upper surface 12a and a lower surface 12b with a second layer 14 on the upper surface 12a of the first layer 12. There may be an additional third layer 16 as shown in Figure 5 on the lower surface 12b of the first layer 12. While the second layer 14 and third layer 16 are shown on a fiber 10 being a rectangular cross-section tape element, the second and/or third layers may be on any shaped fiber. If the second layer 14 and third layer 16 are applied to a fiber without flat sides, the upper half of the circumference would be designated as the "upper" surface and the lower half of the circumference would be designated as the "lower" surface.

The optional second layer 14 and third layer 16 may be formed at the same time as the first layer in a process such as co-extrusion or may be applied after the first layer 12 is formed in a process such as coating. The second and third layers preferably contain a polymer of the same class as the polymer of the first layer, but may also contain additional polymers. In one embodiment, the second and/or third layers contain a polymer a block isocynate polymer. The second and third layers 14, 16 may help adhesion of the fiber to the rubber. Preferably, the melting temperature (Tₘ) of the first layer 12 is greater than the Tₘ of the second layer 14 and third layer 16.

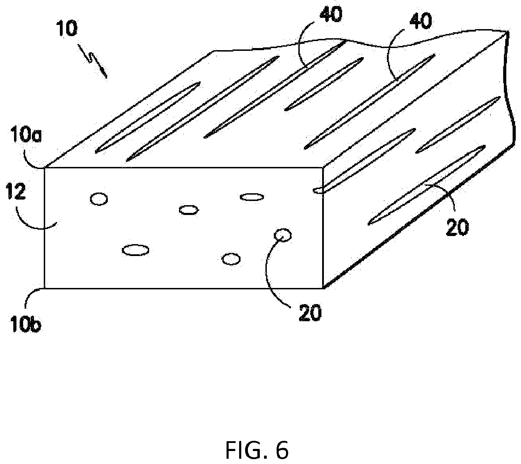

In one embodiment, the tape elements 10 contain a plurality of voids. Figure 5 shows a fiber 10 having a first layer 12 containing a plurality of voids 20. Figure 6 is a micrograph at 50,000X magnification of a cross-section of one embodiment of the fiber containing voids. "Void" is used herein to mean devoid of added solid and liquid matter, although it is likely the "voids" contain gas. While it has been generally accepted that voided fibers may not have the physical properties needed for use as reinforcement in rubber articles, it has been shown that the voided fibers have some unique benefits. Firstly, presence of voids in the fiber occurs at the cost of the polymer mass. This means that the density of these fibers would be lower than their non-voided counterparts. The volume fraction of the voids would determine the percentage by which the density of this fiber would be lower than the polymer resin. Secondly, the voids act as bladders for an adhesive promoter to be infused into the voided layer/voided fiber, thus providing an anchoring effect. Thirdly, the shape of these voids may control the crack propagation front in an event such as fatigue. The extra surface available for crack propagation would reduce the loss of stress singularity in a cyclic fatigue event involving tensile and/or compressive loading. For the thermoplastic polymers making up the first layer 12 of the fiber 12, the high shear flows during the over-drawing layers to chain orientation and elongation leading to the presence of polymer depleted regions or voids. The voids may be present in any or all of the layers 12, 14, 16 of the tape elements 10. In addition, the stabilizing layer 312 may contain some fibers having no voids and some fibers having voids.

The voids 20 typically have a needle-like shape meaning that the diameter of the cross-section of the void perpendicular to the fiber length is much smaller than the length of the void due to the monoaxially orientation of the fiber. This shape is due to the monoaxially drawn nature of the tape elements 10.

In one embodiment, the voids are in the tape elements in an amount of between about 3 and 20 % by volume. In another embodiment, the voids are in the tape elements in an amount of between about 3 and 18%vol, about 3 and 15 %vol, 5 and 18 %vol, or about 5 and 10 %vol. The density is inversely proportional to the void volume. For example if the void volume is 10 %, then the density is reduced by 10 %. Since the increase in the voids is typically observed at higher draw ratios (which results in higher strength), the reduction in density leads to an increase in the specific strength and modulus of the fiber which is desired for several applications such as high performance tire reinforcements.

In one embodiment, the size of the voids formed have a diameter in the range of between about 50 and 400 nm, more preferably 100 to 200 nm, and a length of between about 1 and 6 microns, more preferably between about 2 and 3 microns.

The voids 20 in the tape element 10 may be formed during the monoaxially orientation process with no additional materials, meaning that the voids do not contain any void-initiating particles. The orientation is believed to be a driving factor for the origin of voids in the tape elements. It is believed that slippages between semi-molten materials lead to the formation of voids. The number density of the voids depends on the viscoelasticity of the polymer element. The uniformity of the voids along the transverse width of the oriented tape element depends on whether the complete polymer element has been oriented in the drawing process along the machine direction. It has been observed that in order for the complete polymer element to be oriented in the drawing process, the heat has to be transferred effectively from the heating element (this could be water, air, infra-red, electric and so on) to the polymer fiber. Conventionally, in industrial processes that utilize a hot air convective heating, one feasible way to orient polymer tape elements and still maintain industrial speeds is to restrict the polymer fibers in terms of its width and thickness. This means that complete orientation along the machine direction would be achievable more easily when the polymer tape elements are extruded from slotted dies or when the polymer is extruded through film dies and then slit into narrow widths before orientation.

In another embodiment, the tape elements 10 contain void-initiating particles. The void-initiating particles may be any suitable particle. The void-initiating particles remain in the finished tape element and the physical properties of the particles are selected in accordance with the desired physical properties of the resultant tape element. When there are void-initiating particles in the first layer 12, the stress to the layer (such as mono-axial orientation) tends to increase or elongate this defect caused by the particle resulting in elongation a void around this defect in the orientation direction. The size of the voids and the ultimate physical properties depend upon the degree and balance of the orientation, temperature and rate of stretching, crystallization kinetics, and the size distribution of the particles. The particles may be inorganic or organic and have any shape such as spherical, platelet, or irregular. In one embodiment, the void-initiating particles are in an amount of between about 2 and 15 %wt of the fiber. In another embodiment, the void-initiating particles are in an amount of between about 5 and 10%wt of the fiber. In another embodiment, the void-initiating particles are in an amount of between about 5 and 10 %wt of the first layer.

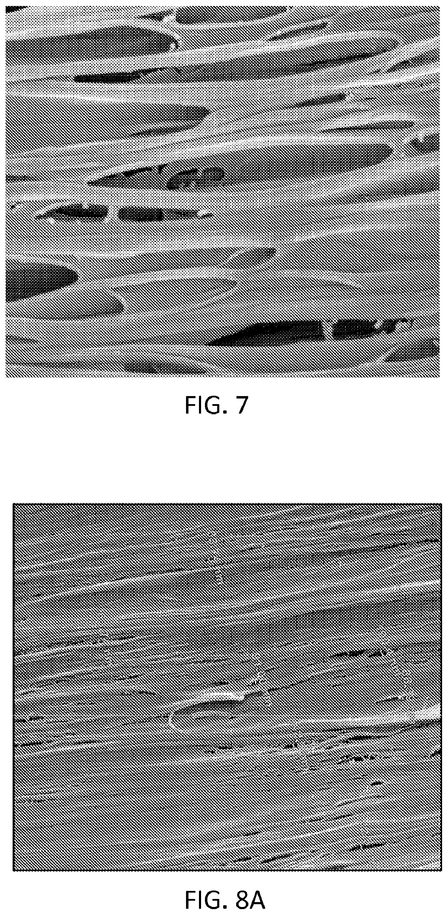

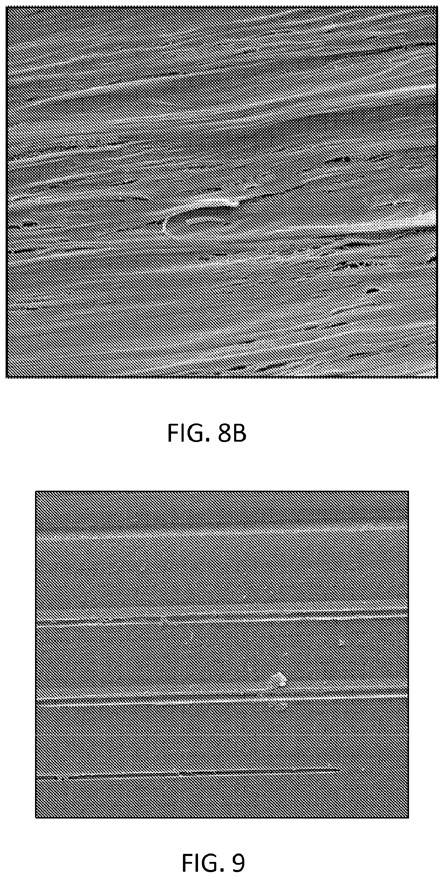

In one preferred embodiment, the void-initiating particle is nanoclay. In one embodiment, the nanoclay is a cloisite with 10% of the clay having a lateral dimension less than 2µm, 50% less than 6 µm and 90% less than 13 µm. The density of the nanoclay is around 1.98 g/cm³. Nanoclay may be preferred in some applications for a variety of reasons. Firstly, nanoclay has a good miscibility with a variety of polymers, polyamides in particular. Secondly, the high aspect ratio of nanoclay is presumed to improve several mechanical properties due to preferential orientation in the machine direction. In one embodiment, the nanoclay is in an amount of between about 5 and 10 %wt of the fiber. In another embodiment, the nanoclay is in an amount of between about 5 and 10 %wt of the first layer. Figure 8A is a micrograph at 20,000X magnification of a cross-section of one embodiment of the fiber containing voids and void-initiating particles showing some diameter measurements of the voids and Figure 8B is a micrograph at 20,000X magnification of a cross-section of one embodiment of the fiber containing voids and void-initiating particles showing some length measurements of the voids.

The second and third layers 14, 16 of the tape element 10 may be voided or substantially non-voided. Having non-voided skin layers (second and third layers 14, 16) may help with controlling the size and concentration of the voids throughout the first layer 12 as the skin layers reduce the edge effects of the extrusion process on the inner first layer 12. In one embodiment, the second and/or third layers 14, 16 contain void-initiating particles, voids, and surface crevices while the first layer 12 contains voids but not void-initiating particles.

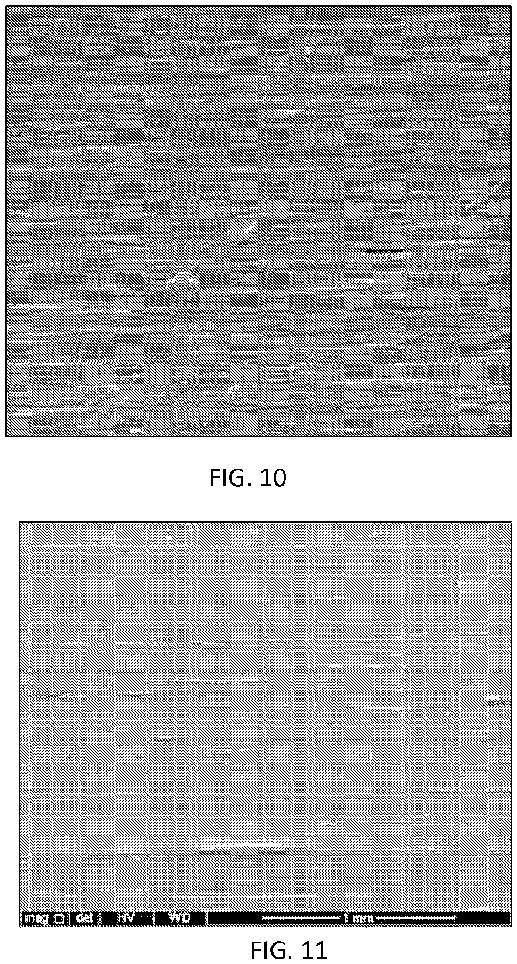

Referring back to Figure 6, in another embodiment, the tape elements 10 contain crevices 40 on at least one outermost surface (upper surface 10a or lower surface 10b) of the tape element 10. The tape element 10 upper surface 10a corresponds to the first layer 12 upper surface 12a and the tape element 10 lower surface 10b corresponds to the first layer 12 lower surface 12b if the tape element 10 contains only a first layer. The crevices may also be present in the second and/or third layers 14, 16 if present forming the outmost surface of the tape element 10. Figure 9 is a micrograph at 1,000X magnification of a surface of one embodiment of the fibers having crevices. Figure 10 is a micrograph at 20,000X magnification of a surface of one embodiment of the fibers having crevices.

The crevices, also known as valleys, channels, or grooves are oriented along the length of the tape element 10 in the direction of monoaxial orientation. The average size of these crevices is about ranged anywhere between 300 µm to 1000 µm in length and are in a frequency of between about 5 - 9 crevices/mm² as shown in Figure 11, taken at 100,000X magnification. The crevices are formed when there is a defect in the surface of the fiber during the drawing or orientation process. In some embodiments, the nanoclay particle or agglomerated nanoclay particles can act as induced defects. If a nanoclay particle is present in the polymer element, the orientation of the polymer element takes place around the induced crack front and propagates along that front in the machine orientation direction leading to the formation of crevices.

In one embodiment, the crevices are formed by the void-initiating particles. Preferably, the crevices are formed from nanoclay void-initiating particles. While surface defects such as crevices are typically viewed as a defect and are minimized or eliminated in tape elements, it has been shown that tape elements 10 having crevices 40 display excellent adhesion to rubber when embedded into the rubber when the tape elements within the stabilizing fabrics 312 are coated with an adhesion promoter. While not being bound to any particular theory, it is believed that the adhesion promoter at least partially impregnates and fills the crevices forming an anchor and improving the adhesion between the tape element and the rubber. In fact, when tested, the cohesion between the rubber to itself fails before the adhesion between the tape element and the rubber fails.

In another embodiment, the stabilizing yarns 311 of the stabilizing fabric 312 are any other suitable yarn. The yarns may have any suitable composition, size, and/or shape. These additional yarns may include, but are not limited to: polyamide, aramid (including meta and para forms), rayon, PVA (polyvinyl alcohol), polyester, polyolefin, polyvinyl, nylon (including nylon 6, nylon 6,6, and nylon 4,6), polyethylene naphthalate (PEN), cotton, steel, carbon, fiberglass, steel, polyacrylic, polytrimethylene terephthalate (PTT), polycyclohexane dimethylene terephthalate (PCT), polybutylene terephthalate (PBT), PET modified with polyethylene glycol (PEG), polylactic acid (PLA), polytrimethylene terephthalate, nylons (including nylon 6 and nylon 6,6); regenerated cellulosics (such as rayon or Tencel); elastomeric materials such as spandex; high-performance fibers such as the polyaramids, and polyimides natural fibers such as cotton, linen, ramie, and hemp, proteinaceous materials such as silk, wool, and other animal hairs such as angora, alpaca, and vicuna, fiber reinforced polymers, thermosetting polymers, blends thereof, and mixtures thereof. In one embodiment, the stabilizing yarns 311 are a cabled polyester yarn.

Referring back to Figure 2, the stabilizing fabric 312 may be any suitable fabric layer such as a knit, woven, non-woven, and unidirectional textile. Preferably, the stabilizing fabric 312 has an open enough construction to allow subsequent coatings (such as rubber) to pass through the stabilizing fabric 312 minimizing window pane formation.

In one embodiment, the stabilizing fabric 312 is a woven textile, for example, plain, satin, twill, basket-weave, poplin, jacquard, and crepe weave textiles. Preferably, the woven textile is a plain weave textile. It has been shown that plain weaves have good abrasion and wear characteristics. A twill weave has been shown to have good properties for compound curves so may also be preferred for rubber articles.

In another embodiment, the stabilizing fabric 312 is a knit, for example a circular knit, reverse plaited circular knit, double knit, single jersey knit, two-end fleece knit, three-end fleece knit, terry knit or double loop knit, weft inserted warp knit, warp knit, and warp knit with or without a micro-denier face.

In another embodiment, the stabilizing fabric 312 is a multi-axial, such as a tri-axial fabric (knit, woven, or non-woven). In another embodiment, the stabilizing fabric 312 is a bias fabric. In another embodiment, the stabilizing fabric 312 is a non-woven. The term non-woven refers to structures incorporating a mass of yarns that are entangled and/or heat fused so as to provide a coordinated structure with a degree of internal coherency. Non-woven fabrics for use as the stabilizing fabric 312 may be formed from many processes such as for example, meltspun processes, hydroentangeling processes, mechanically entangled processes, stitch-bonded and the like.

In another embodiment, the stabilizing fabric 312 is a unidirectional and may have overlapping fiber or may have gaps between the fibers. In one embodiment, reinforcing yarns are wrapped continuously around the rubber article to form the unidirectional fibrous layer or wound back and forth across the width of the rubber article to form a unidirectional layer with the reinforcing yarns perpendicular to the direction of rotation. In some embodiments, inducing spacing between the reinforcing yarns may lead to slight rubber bleeding between the fibers which may be beneficial for adhesion.

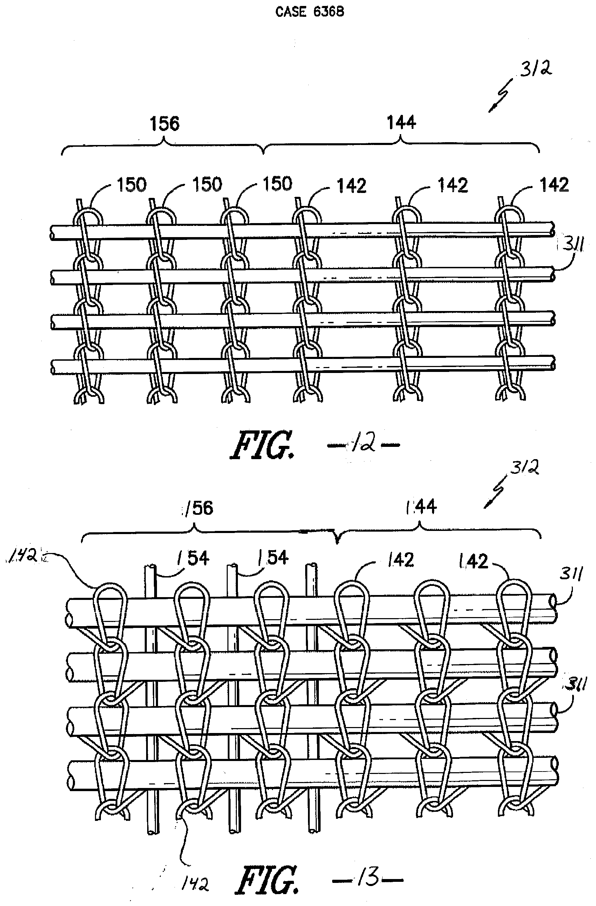

In one embodiment, the stabilizing fabric 312 is a warp knit, weft inserted construction generally comprises a set of weft inserted reinforcing yarns 311 and a set of high-stretch machine direction yarn elements 142 forming a repeating wale stitch pattern (see Figures 12-15). In this regard, by the term "high-stretch yarn elements" is meant yarn elements characterized by an elongation at break of greater than about 30%. The high-stretch machine direction yarn elements define a stretchable fabric zone 144 for disposition across the central portion of a tire carcass (or other rubber reinforced article 200) inboard from the beads 120. In the illustrated configuration, an optional set of low-stretch machine direction yarn elements 150 of lower stretch character relative to the first machine direction yarn elements 142 form a repeating wale stitch pattern to define a low stretch reinforcement zone 156 to provide additional support at locations adjacent to the beads 120. In this regard, by the term "low-stretch yarn elements" is meant yarn elements characterized by an elongation at break of not greater than about 30%. As shown, in the illustrated exemplary construction, both the high-stretch yarn elements 142 and the low-stretch yarn elements 150 are formed in a so called "pillar stitch" although other stitching arrangements may be used if desired including chain stitches, tricot stitches leno weaves or the like.

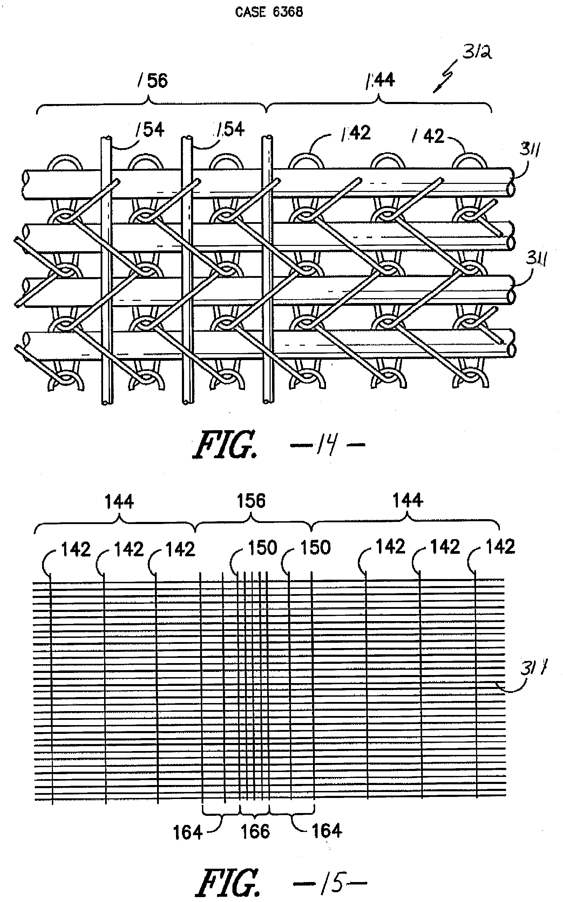

By way of example only, and not limitation, Figure 15 schematically illustrates one pattern for placement of the high-stretch yarn elements 142 defining stretchable fabric zones 144 and the low-stretch yarn elements 150 defining a reinforcement zone 156. As will be appreciated, while only a single reinforcement zone 156 is shown, the illustrated pattern may be repeated across the fabric multiple times such that each of the stretchable fabric zones 144 is bordered on either side by a low-stretch reinforcement zone 156. Thus, by cutting the fabric in the machine direction at the interior of the reinforcement zones 156, multiple panels may be produced with each panel including an interior stretchable fabric zone 144 with a reinforcement zone on either lateral edge.

The spacing between reinforcement zones 156 may be set to accommodate a given tire size such that the reinforcement zones 156 are in the desired position adjacent the beads 120 or in such other locations as may be desired. As shown, in the illustrated arrangement the reinforcement zone 156 is made up of a pair of edge reinforcement segments 164 on either side of a core reinforcement segment 166. By way of example only, each of the edge reinforcement segments 164 may have a width of about 1 cm and the core reinforcement segment 166 may have a width of about 1 centimeter. However, these widths may be adjusted as desired. As illustrated, the packing density (ends per centimeter) of the machine-direction yarns elements may be adjusted to provide desired character across the fabric. By way of example only, according to one embodiment the low-stretch yarn elements 150 are 235 decitex standard nylon 6,6 yarns which are present at a packing density of about 4.3 ends per centimeter in the core reinforcement segment 166 and at a packing density of about 2.16 ends per centimeter in the edge reinforcement segments 164. The high-stretch yarn elements 142 are 78 decitex/3 (234 decitex total) partially oriented nylon 6,6 present at a packing density of about 0.86 ends per centimeter in the stretchable fabric zones 144. Thus, when the fabric is segmented, the concentration of yarns in the machine direction is greater along the edges than at the interior. Moreover, the machine direction yarn elements at the edges are low-stretch yarns thereby providing additional stability at the edges.

In one exemplary embodiment, the high-stretch machine direction yarn elements 142 are characterized by an elongation at break of about 30% to about 200% and more preferably about 60% to 150% and most preferably about 60% to 100% such that they can stretch a controlled amount during tire formation. Preferably, the optional low-stretch machine direction yarn elements 150 are characterized by an elongation at break of about 5% - 25% and more preferably about 10% to about 22% and most preferably about 15% to 20% such that the reinforcement zones 156 exhibit very limited stretch during tire formation and use. The percentage elongation at break of the high-stretch machine direction yarn elements 142 is preferably about 1.5 to 6 times greater than the percentage elongation at break of the low-stretch yarn elements 150 and more preferably about 2 to 5 times greater than the percentage elongation at break of the low-stretch machine direction yarn elements 150 and most preferably about 3 to 5 times greater than the percentage elongation at break of the low-stretch machine direction yarn elements 150.

The wales formed by the high-stretch yarn elements 142 and the low-stretch yarn elements 150 extend along the so-called warp or "machine direction" of the carcass stabilizing fabric 112. The weft inserted reinforcing cords 124 run in the so-called weft or "cross-machine direction" of the carcass stabilizing fabric 112. As will be appreciated, the machine direction of a fabric is the direction substantially aligned with the output of the formation machine used to produce the fabric. Conversely, the cross-machine direction is the direction extending across the width of the formation machine.

By way of example only, the stabilizing fabric 312 can be produced in a weft inserted warp knit machine which is wider and faster than a traditional weaving machine. The weft inserted warp knit machine further stabilizes the fabric with the reinforcing cords 311 inserted in chosen loops of the machine direction yarn elements 142, 150. Slitting between the wales in the machine direction can be done with limited de-knitting or fraying.

As will be appreciated, by cutting the carcass stabilizing fabric in the machine direction, a fabric segment of virtually any length may be obtained. Thus, the stabilizing fabric 312 may extend circumferentially about the carcass as a unitary structure without intermediate breaks along the length resulting from splices of the stabilizing fabric, other than those used in the tire building process itself, and with the machine direction of the fabric generally aligned with the direction of rotation. In this arrangement, the reinforcing yarns 311 in the cross-machine direction are oriented in the radial direction transverse to the direction of rotation. The construction material, size, and spacing of the reinforcing yarns 311 and machine direction yarn elements 142, 150 are selected such that they provide the desired strength to the carcass 110.

An alternative embodiment for a knit stabilizing fabric 312 is shown in Figures 13 and 14. Specifically, Figure 3 shows the front face (on the knitting machine) of the stabilizing fabric 312 and Figure 4 shows the back face (on the knitting machine) of the same carcass stabilizing fabric 312. As shown, this exemplary embodiment includes high-stretch machine direction yarn elements 142 disposed in a tricot stitch pattern or other suitable stitch pattern throughout the fabric with a plurality of stabilizing in-lay warp yarns 154 running in the machine direction at localized reinforcement zones 156 across the fabric. As shown, the in-lay warp yarns 154 are arranged within reinforcement zone 156 where added strength and stretch resistance may be desired. By way of example only, and not limitation, such in-lay warp yarns 154 may be arranged in a reinforcement zone 156 which will be adjacent to the beads 120 in the final tire construction. Exemplary in-lay warp yarns include spun staple yarns, multifilament yarns, and/or monofilament yarns and are formed of a material which will restrain the carcass in the warp direction. Some suitable materials for in-lay warp yarns include polyamide, aramides (including meta and para forms), rayon, PVA (polyvinyl alcohol), polyester, polyolefin, polyvinyl, nylon (including nylon 6, nylon 6,6 and nylon 4,6), polyethylene napthalate (PEN), polyethylene terephalate (PET), cotton, polyacrylic or other known artificial or natural fibers. One exemplary material for such in-lay warp yarns is a 235 detx partially oriented Nylon 6,6 although other materials may also be used.

According to one exemplary practice, the reinforcing yarns (sometimes also referred to as reinforcing cords) 311 may be inserted in each stitch. By way of example only, Figures 12 and 13 show the front faces (on the knitting machine) of stabilizing weft inserted fabrics 312 with the reinforcing yarns 311 inserted at every stitch. However, the reinforcing yarns 311 may likewise be inserted in a repetitive construction, for example one weft in every 2 stitches, one weft in every 3 stitches, one weft in every 4 stitches, etc. The reinforcing yarns 311 also may be inserted in a pattern, for example one weft in every stitch for 2, 3, 4, 5, etc. stitches followed by 1, 2, 3, 4, 5, etc. stitches with no weft inserted reinforcing cords.

The high-stretch yarn elements 142 can be made of natural and manmade fibers including polyesters (e.g., polyethylene terephthalate, polypropylene terephthalate, polybutylene terephthalate, and polylactic acid), polyolefins (e.g., polyethylene and polypropylene), polyamides (e.g., nylon 6, nylon 6,6, nylon 4,6, and nylon 12), and any combination thereof or any other known synthetic technical raw material or artificial or natural fibers. By way of example, the high-stretch yarn elements 142 may be made with any single monofilament or multifilaments yarn as well as any multi-ply twisted yarns made with any of the prior listed materials. In accordance with one embodiment, the high-stretch yarn elements 142 may have a linear density between 22 decitex (20 deniers) up to 470 decitex (420 deniers) also in single yarn or multi-ply yarns. Such yarns may have a twist level of about 150 to about 1200 turns/meter (preferably 400-800 turns/meter). One such yarn that may be desirable is a 78 decitex/3 (234 decitex total) partially oriented nylon 6,6 with a twist of about 600 turns/meter and an elongation at break of about 78%. However, other materials may likewise be used if desired.

The optional low-stretch machine direction yarn elements 150 forming the reinforcement zones 156 can be a spun staple yarn, a multifilament yarn, and/or a monofilament yarn and are formed of a material which will restrain the carcass in the circumferential direction. Some suitable materials for the low-stretch machine direction yarn elements 150 include polyesters (e.g., polyethylene terephthalate, polypropylene terephthalate, polybutylene terephthalate, and polylactic acid), polyolefins (e.g., polyethylene and polypropylene), polyamides (e.g., nylon 6, nylon 6,6, nylon 4,6, and nylon 12), aramides (including meta and para forms), rayon, PVA (polyvinyl alcohol), polyethylene napthalate (PEN), cotton, carbon, fiberglass, polyacrylic or other known artificial or natural fibers. In one embodiment, the low-stretch machine direction yarn elements 150 may be multifilament twisted and/or cabled cords of two or more plies made with any of the prior listed materials or combinations thereof. In accordance with one embodiment, the low-stretch machine direction yarn elements 150 may be between 111 decitex (100 deniers) up to 700 decitex (630 deniers) also in single yarn or multiple yarns. Such yarns may have a twist level of about 150 to about 1200 turns/meter (preferably 400-800 turns/meter). One such yarn that may be desirable is a three ply 235 decitex partially oriented nylon 6,6 yarn with elongation at break of about 19%. However, other materials may likewise be used if desired.

Any of the yarn elements may also be hybrid yarns. These hybrid yarns are made of up of at least 2 fibers of different fiber material (for example, cotton and nylon). These different fiber materials can produce hybrid yarns with different chemical and physical properties. Hybrid yarns are able to change the physical properties of the final product they are used in. Some preferred hybrid yarns include an aramide fiber with a nylon fiber, an aramide fiber with a rayon fiber, and an aramide fiber with a polyester fiber.

In accordance with one exemplary formation practice, the reinforcing yarns 311 may be formed from one or more plies of suitable polymeric fiber such as HMLS polyester twisted to about 100 to about 800 turns per meter, more preferably about 200 to about 600 turns per meter, most preferably about 250 to about 500 turns per meter to form a cohesive yarn structure. The linear density of the reinforcing yarns 311 is in the range of about 230 decitex to about 5000 decitex, more preferably about 1500 decitex to about 4000 decitex, and most preferably about 2000 to about 3500 decitex. The yarns forming the reinforcing yarns 311 may be pre-treated by drawing to substantially eliminate stretch in the final yarn and are treated with an adhesion promoter such as VP latex based RFL or the like prior to fabric formation. The reinforcing yarns 311 are inserted as the weft component in a warp knit, weft insertion fabric. The packing density of the reinforcing yarns 311 is in the range of about 80 to about 140 ends per decimeter, more preferably about 95 to about 120 ends per decimeter, most preferably about 105 to about 115 ends per decimeter. The reinforcing yarns 311 extend through loops formed by warp-knit, high-stretch yarn elements 142 having a linear density of between 122 decitex and about 470 decitex with a twist level of about 150 to about 1200 turns/meter and an elongation at break of at least 30%. The resultant fabric is characterized by a braking strength in the weft direction of at least 170 Newtons (e.g. greater than 173 Newtons, greater than 181 Newtons, greater than 186 Newtons). At 45 Newtons, the resultant fabric is characterized by an elongation in the weft direction of less than 5% (e.g. less than 4%, less than 3.5%). At 53 Newtons, the resultant fabric is characterized by an elongation in the weft direction of less than 7% (e.g. less than 6.5%, less than 5%). At 67 Newtons, the resultant fabric is characterized by an elongation in the weft direction of less than 7% (e.g. less than 6.5%, less than 5%). The resultant fabric exhibited adhesion peel strength of greater than 100 Newtons per 25mm (e.g. greater than 120 Newtons per 25mm) relative to underlying rubber. The resultant fabric was characterized by hot air shrinkage of less than 3% (e.g. not greater than 2.8%, not greater than 2.5%, not greater than 1.8%),

It is also contemplated that the stabilizing fabric 312 may be a woven fabric if desired. Such fabrics may be formed by techniques such as air jet weaving, water-jet weaving, or rapier weaving as will be known to those of skill in the art. In this regard, rapier weaving may be desirable for use with high decitex reinforcing cords. By way of example only, and not limitation, an exemplary woven fabric may be a so called "plain weave" or "twill weave" fabric in which reinforcing yarns 311 as previously described are disposed along the weft direction. In such a construction, the warp yarns may be formed from materials similar to the stitching yarns 142 in the warp knit weft insertion construction. It is also contemplated that the stabilizing fabric 312 may be in the form of a laid scrim or the like if desired.

As noted previously, the reinforcing yarns 311 may be dip coated or otherwise treated with an adhesion promoter prior to fabric formation to improve the adhesion with any other material to be reinforced (as for example, without any limitation: rubber material, PVC coating material, etc). Typical examples of adhesion promoters included Resorcinol Formaldehyde Latex (RFL) as well as formaldehyde free materials such as isocyanate based material, epoxy based material, and materials based on melamine formaldehyde resin. Alternatively, the adhesion promoter may be applied subsequent to fabric formation, such as by dip coating or other application method.

The stabilizing fabric 312 may also have a tackified finish applied for facilitating adhesion, or green tack, during the building process of the green tire. This may eliminate the need for calendering the stabilizing fabric to a rubber carrier during the tire-building process. However, calendering to a carrier of rubber or other material may be used if desired. The selection of materials for the tackified finish will depend upon the materials selected for use in the tire, and the skilled person on the basis of his common knowledge can easily determine them appropriately. Tackified finishes can be achieved by various methods such as coating the fabric in an aqueous blend of rosin or crude oil residue and rubber lattices, or with a solvent solution of an un-vulcanized rubber compound.

As noted previously, the practice of calendering the stabilizing fabric to a rubber carrier for subsequent connection to an underlying inner layer may tend to add a fairly significant additional mass of rubber to the final construction. Specifically calendering a stabilizing fabric to a rubber carrier typically yields a reinforced ply having a mass which is at least 300% of the mass of fiber in the reinforced ply. The stabilizing fabrics of the present invention may be operatively connected to the inner liner either with or without calendering to a carrier as a preliminary step. In the event that calendering to a carrier is not utilized, the adhesion promoters, tackified finishes and other materials applied to the stabilizing fabric may be present at relatively low add-on levels. In this regard, in accordance with one exemplary embodiment, the mass of the stabilizing fabric ply including any applied materials may be less than about 170% of the mass of fiber constituents in the stabilizing fabric ply. Thus, the overall mass of rubber in the tire is reduced. Such a reduction may be desirable in some circumstances.

The elimination of calendering to a carrier layer may also provide the further advantage of permitting the stabilizing fabric to stretch independently of any constraining material, such as with a layer of calendered rubber. Thus, the stretch characteristics of the stabilizing fabric may be controlled with greater precision through the selection of materials and construction techniques without influence from an applied carrier layer.

In practice, the formation of the stabilizing fabric 312 begins with selection of the desired yarn characteristics. As a preliminary step, the fibers for formation of the yarns are subjected to drawing to impart desired levels of strength and elongation. The fibers are then formed into yarns and may be twisted to provide additional mechanical resilience. The yarn is then treated with adhesive promoter, such as an RFL treatment before fabric formation. The stabilizing fabric 312 is formed in large widths, such as 61.4 inches (1 inch = 25,4 mm) and may be treated with an additional adhesion promoter if desired. If a tackified finish is desired, this is provided following the fabric formation. The final fabric is slit along the machine direction into the specific widths for placement on a spool. The fabric then may be used directly or be calendered with a rubber coating for use in a tire carcass in overlying relation to an inner liner.

In the tire formation process, the tire carcass 110 is formed with the stabilizing fabric 312, metal beads, 120, and belt plies 122. In this regard, within the tire carcass 110, the stabilizing fabric 312 may be arranged in direct contact with a halo-rubber or other inner liner material as may be utilized. Alternatively, one or more intermediate layers may be disposed between the stabilizing fabric 312 and the inner liner material if desired. Where more than one layer of the stabilizing fabric is to be used, it may be desirable to skim coat or calender a thin layer of rubber to the stabilizing fabric to facilitate adhesion between the layers when the tire is built. After the tire carcass is formed (and is tire shaped), the cap ply layer 130 is wound around the belt plies 122. The tread 104 is molded onto the subassembly, and the tire 100 is completed.

Thus, a process according to the invention would involve forming a fabric having a machine (e.g. warp) direction, and a cross machine (e.g. weft) direction, such as by a weaving, warp-knit, weft insertion or laid scrim manufacturing process, with the warp direction being the direction in which the fabric is manufactured and taken up from the fabric production process. In a first exemplary embodiment, at least a first plurality of yarns in the machine direction (warp yarns) have an elongation at break of 30% to 200%. In another exemplary embodiment, the weft yarns (cross-machine direction) have an elongation at break of not greater than 30%. The fabric is then desirably slit to the width desired for the particular tire to be manufactured, and optionally treated with a tacky finish or other treatment. The fabric can then be cut to the length needed to cover the full diameter of the tire drum on which the tire is being made, or it can be provided as a continuous roll which is cut to length as the carcass is being built. An inner liner is provided on a tire building drum, and the stabilizing fabric is provided on the drum such that the machine direction yarns from the fabric formation process extend around the drum such that they will be oriented in the tire in substantial alignment with the direction of tire rotation and the cross-machine direction yarns are oriented radially relative to the direction of tire rotation. In any event, because the stabilizing fabric is provided as a continuous roll of material, a continuous series of tires can be built having no splices in the tires other than those formed during the tire building process itself. Also, because the fabric does not require the layer of calendered rubber required in other conventional processes, a source of manufacturing variation can be reduced or eliminated.

Referring back for Figures 2A and 2B, the air-blocking stabilizing fabric system 390 contains an air-blocking layer 391 in the form of a film or a film forming coating. The purpose of the air-blocking layer is to block air from escaping the reinforced rubber article and serves to possibility replace the typical butyl rubber inner liner of a tire.

The air-blocking layer may contain any materials suitable for the end product. Preferably, the air-blocking layer has an air permeability of between 100 and 200 cm³/m²/day, according to Standards ASTM D-3985 and DIN 53380, Teil3. More preferably, the air-blocking layer has an air permeability of between 50-100 cm³/m²/day.

The materials forming the air-blocking layer 391 also preferably have elasticity and stretch. This elasticity allows for the tire expansion during the tire manufacturing process. Preferably, air-blocking layer 391 has an elongation to break of between about 50 to 400 %, more preferably at least 100 %, more preferably between about 50 and 200 %.

The air-blocking layer 391 may contain any suitable material, including but not limited to polyolefin (polyethylene (PE), polypropylene (PP), ethyl vinyl acetate (EVA), polyisobutalyene (PIB), co-polymers, and the like) or polyurethane (thermoplastic urethane (TPU), thermoplastic urethane/co-polyesters (TPU/CoPES), TPU/TPU, and the like). In another embodiment, the blocking layer 391 may contain polyamide (PA) such as nylon, polyester (PES or PET), and co-polymers of PA and PES. In one embodiment, the film or coating contains a small percentage of buytl rubber as a component.

In one embodiment, the air-blocking layer contains a polyamide composition comprising a polyamide resin (A), as a matrix, and a modifying polymer (C), dispersed therein, having a functional group (B) reactive with the polyamide resin (A), wherein a tensile stress at break of the modifying polymer (C) is 30 to 70% of the tensile stress at break of the polyamide resin (A), and a tensile elongation at break of the modifying polymer (C) is 100 to 500% of the tensile elongation at break of the polyamide resin (A). More details about this chemistry may be found in US Patent 8,021,728 issued September 20, 2011, which is incorporated herein by reference.

In another embodiment, the air-blocking layer contains Exxcore™ DVA resin, which is a dynamically vulcanized alloy (DVA) resin, a blend of specialty elastomer and nylon.

If the air-blocking layer 391 is a coating, the coating is preferably formed by a film forming polymer meaning that when coated, the polymer forms a continuous film having the desired characteristics. In another embodiment, the air-blocking layer 391 is a film with an air-blocking coating on the film.

Preferably, the air-blocking layer 391 has good adhesion to the reinforcing fabric 312 and the other components within the rubber reinforced article 200 (most typically rubber). Preferably, the air-blocking layer has good thermo-bonding properties meaning that it can be heated for better adhesion. Preferably, the air-blocking layer 390 will adhere and bond with an adhesion promoting layer such as an RFL, the RFL also bonding with rubber for good adhesion between the air-blocking layer and the rubber.

The air-blocking layer 391 may have any suitable thickness which gives the layer 391 processability and performance. In one embodiment, the air blocking layer being a film has a thickness of between about 35 and 200 micrometers, more preferable between about 35 and 100 micrometers. In one embodiment, the air blocking layer being a coating has a thickness of between about 35 and 300 micrometers, more preferable between about 35 and 200 micrometers, more preferably between about 35 and 100 micrometers. In the embodiment where the stabilizing fabric 312 is a woven or knit construction coated with the air-block layer 391, preferably the air-blocking layer 391 has a thickness of between about 600 µm and 1000 µm.

The air-blocking layer 391 being a film may be formed by most conventional film formation techniques. The air-blocking layer 391 being a coating may be formed by any suitable coating technique including knife, knife over roll, gap, and curtain coating. A typical process of applying an air sealing coating would be to knife coat the air-blocking polymer on the surface of a woven or knitted construction or a film.

In one embodiment, the air-blocking stabilizing fabric system is formed by first forming a free-standing film and then placing yarns (tape elements or other yarns) in a unidirectional way such that the yarns are in the cross-machine direction. Adhesion materials may be applied to the film before the yarns are applied to act as a glue and may additionally be coated onto the applied yarns for better adhesion to the other components in the rubber reinforced article (such as rubber).

Having an, air-blocking stabilizing fabric system is preferable for tire manufactures as instead of having two separate materials that have to be layered, adhered, and joined during the tire manufacturing process, a fabric system enables the tire manufactures to use one component which serves multiple functions.

In one embodiment, the yarns in the air-blocking stabilizing fabric system are surrounded at least partially by an adhesion promoter. A frequent problem in making a rubber composite is maintaining good adhesion between the rubber and the fibers and fibrous layers. A conventional method in promoting the adhesion between the rubber and the fibers is to pretreat the yarns with an adhesion layer typically formed from a mixture of rubber latex and a phenol-formaldehyde condensation product wherein the phenol is almost always resorcinol. This is the so called "RFL" (resorcinol-formaldehyde-latex) method. The resorcinol-formaldehyde latex can contain vinyl pyridine latexes, styrene butadiene latexes, waxes, fillers and/or other additives. "Adhesion layer" used herein includes RFL chemistries and other non-RFL rubber adhesive chemistries.

In one embodiment, the adhesion chemistries are not RFL chemistries. In one embodiment, the adhesion chemistries do not contain formaldehyde. In one embodiment the adhesion composition comprises a non-crosslinked resorcinol-formaldehyde and/or resorcinol-furfural condensate (or a phenol-formaldehyde condensate that is soluble in water), a rubber latex, and an aldehyde component such as 2-furfuraldehyde. The composition may be applied to textile substrates and used for improving the adhesion between the treated textile substrates and rubber materials. Details about the chemistry and why these chemistry may be preferred over RFL chemistries for certain applications may be found in US Patent Application Publication 2012/0214372 published 8/23/2012, US Patent Application Publication 2012/0211139 published on 8/23/2012, and US Patent 8,247,490 issued 8/21/2012, all of which are incorporated herein in their entirety.

The adhesion layer may be applied to the yarns before formation into a stabilizing layer or after the stabilizing layer is formed. The adhesion layer may also be applied to the air-blocking layer before and/or after the stabilizing layer is attached to the air-blocking layer. Preferably, the adhesion layer is a resorcinol formaldehyde latex (RFL) layer or rubber adhesive layer. Generally, the adhesion layer is applied by dipping the fibrous layer or fibers in the adhesion layer solution. The fibrous layer or fibers then pass through squeeze rolls and a drier to remove excess liquid. The adhesion layer is typically cured at a temperature in the range of 150° to 200°C.

The adhesion promoter may also be incorporated into a skin layer (the second and/or third layer) of the fiber or may be applied to the fiber and/or fibrous layer is a freestanding film. Thermoplastic films in this category consist of various polyamides and co-polymers thereof, polyolefins and co-polyolefins thereof, polyurethanes and methymethacrylic acid. Examples of these films include 3M™ 845 film, 3M™ NPE-IATD 0693, and Nolax™ A21.2242 film.

For the embodiments where the yarns are tape elements, the tape elements may be formed in any suitable manner or process. There are two preferred methods for forming the reinforced rubber article. The first begins with slit extruding polymer to form fibers (in one embodiment the fibers are tape elements having a square or rectangular cross-section). The die typically contains between 5 and 60 slits, each one forming a fiber (tape element). In one embodiment, the each slit die has a width of between about 15 mm and 50 mm and a thickness of between about 0.6 and 2.5 mm. The fibers once extruded are typically 4 to 12 mm wide. The fibers may be extruded having one layer or may have a second layer and/or a third layer using co-extrusion.

Next, the fibers are monoaxially drawn. In one embodiment, the fibers are drawn to a ratio of preferably about 5 or greater resulting in a fiber having a modulus of at least about 2 GPa and a density of at least about 0.85 g/cm³.

Once the fibers are formed, a second and/or third layer may be applied to the fibers in any suitable manner, including but not limited to, lamination, coating, printing, and extrusion coating. This may be done before or after the monoaxial orientation step.

In one embodiment, the drawing of the fibers causes voiding to occur in the fiber. In one embodiment, the voids formed are in an amount of between about 3 and 18%vol. In another embodiment, the extrudant contains polymer and void- initiating particles causing voiding in the fiber and/or crevices on the surface of the fiber to form.

The fibers are formed into a fibrous layer which includes wovens, non-wovens, unidirectionals, and knits. The fibers are then optionally coated with an adhesion promoter such as an RFL coating and at least partially embedded (preferably fully embedded) into rubber. In the embodiments where the fibers contain crevices, it is preferred the adhesion coating at least partially fills the crevices.

In the second method, a polymer is extruded into a film. The film may be extruded having one layer or may have a second layer and/or a third layer using co-extrusion. Next, the film is slit into a plurality of fibers. In one embodiment, the fibers are tape elements having square or rectangular cross-sectional shapes. These fibers are then monoaxially drawn. In one embodiment, the fibers are drawn to a ratio of preferably about 5 or greater resulting in a fiber having a modulus of at least about 2 GPa and a density of at least about 0.85 g/cm3.

Once the fibers are formed, if a second and/or third layer are desired they may be applied to the fibers in any suitable manner, including but not limited to, lamination, coating, printing, and extrusion coating. This may be done before or after the monoaxial orientation step.

In one embodiment, the drawing of the fibers causes voiding to occur in the fiber. In one embodiment, the voids formed are in an amount of between about 3 and 18%vol. In another embodiment, the extrudant contains polymer and void-initiating particles. When monoaxially oriented, this causes voiding in the fiber and/or crevices on the surface of the fiber to form.

The fibers are formed into a fibrous layer which includes wovens, non-wovens, unidirectionals, and knits. The fibers are then optionally coated with an adhesion promoter such as an RFL coating and at least partially embedded into rubber. In the embodiments where the fibers contain crevices, it is preferred the adhesion coating at least partially fills the crevices.

In one embodiment, the die extruding the film or fiber has a rectangular cross-section (having an upper side, a lower side, and 2 edge sides) where at least one of the upper or lower sides of the die has a serrated surface. The may produce films or films having an advantageous surface structure or surface texture.

In another embodiment, the fibers are heat treated before they are formed into the fibrous layer. Heat treatment of fibers offers several advantages such as higher modulus, higher strength, lower elongation and especially lower shrinkage. Methods to heat treat the fibers include hot air convective heat treatment, steam heating, infra-red heating or conductive heating such as stretching over hot plates - all under tension.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. The scope of the invention is defined by the claims.

## Claims

1. A pneumatic tire carcass (301) having a radial direction and a circumferential direction, wherein the tire carcass (301) comprises:
(i) at least one ply of stabilizing fabric (312) which
- comprises a plurality of reinforcing yarns (311) comprising monoaxially drawn tape elements (10) having a rectangular cross-section, an upper surface (12a), and a lower surface (12b), wherein the tape elements (10) comprise at least a first layer (12) comprising a polymer selected from polyamide, polyester, co-polymers and mixtures thereof, and having a draw ratio of at least 5, a modulus of at least 2 GPa, and a density of at least 0.85 g/cm³, and
- is disposed within the carcass (301) such that the reinforcing yarns (311) are arranged in the radial direction of the carcass (301); and
(ii) an air-blocking layer (391) attached to the stabilizing fabric (312).

2. The pneumatic tire carcass (301) of claim 1, wherein the air-blocking layer (391) has air permeability of 50-100 cm³/m²/day, measured according to ASTM D-3985 and DIN 53380, Part 3.

3. The pneumatic tire carcass (301) of claim 1, wherein the air-blocking layer (391) has an elongation to break of 50-400%.

4. The pneumatic tire carcass (301) of claim 1, wherein the stabilizing fabric (312) further comprises at least a first plurality of machine direction yarn elements which (i) are of relatively lower tenacity than the reinforcing yarns (311), and (ii) have an elongation at break of 30-200%.

5. The pneumatic tire carcass (301) of claim 1, wherein the stabilizing fabric (312) is selected from a woven fabric, a knit fabric, a non-woven fabric and a unidirectional fabric.

6. The pneumatic tire carcass of claim 1, wherein the stabilizing fabric (312) is at least partially embedded into the air-blocking layer (391).

7. A process of forming a pneumatic tire carcass (301) having a radial direction and a circumferential direction comprising:
(i) forming at least one ply of stabilizing fabric (312) which
- has a machine and cross-machine direction, and
- comprises a plurality of reinforcing yarns (311) in the cross-machine direction, which reinforcing yarns (311) comprise monoaxially drawn tape elements (10) having a rectangular cross-section, an upper surface (12a), and a lower surface (12b), wherein the tape elements (10) comprise at least a first layer (12) comprising a polymer selected from polyamide, polyester, co-polymers and mixtures thereof, and having a draw ratio of at least 5, a modulus of at least 2 GPa, and a density of at least 0.85 g/cm³,
(ii) attaching an air-blocking layer (391) having an air permeability of 50-100 cm³/m²/day or of 100-200 cm³/m²/day, measured according to ASTM D-3985 and DIN 53380, Part 3, to the stabilizing fabric (312); and
(iii) arranging the stabilizing fabric (312) and air-blocking layer (391) in the carcass (301) such that the reinforcing yarns (311) are arranged in the radial direction of the carcass (301).

8. The process of claim 7, wherein the air-blocking layer (391) has air permeability of 50-100 cm³/m²/day.

9. The process of claim 7, wherein the air-blocking layer (391) has an elongation to break of 50-400%.

10. The process of claim 7, wherein the stabilizing fabric (312) is selected from a woven fabric, a knit fabric, a non-woven fabric, and a unidirectional fabric.

11. A pneumatic tire carcass (301) which has a radial direction and a circumferential direction, wherein the tire carcass (301) comprises:
- at least one ply of stabilizing fabric (312) comprising a plurality of reinforcing yarns (311) and being disposed within the carcass (301) such that the reinforcing yarns (311) are arranged in the radial direction of the carcass (301); and,
- an air-blocking layer (391) comprising a polymer selected from polyolefin, ethyl vinyl acetate, polyisobutalyene or polyurethane, polyamide, polyester, co-polymers of PA and PES, dynamically vulcanized alloy resin, co-polymers, and mixtures thereof;
wherein the stabilizing fabric (312) is embedded into the air-blocking layer (391).

12. The pneumatic tire carcass (301) of claim 11, wherein the air-blocking layer (391) has air permeability of 50-100 cm³/m²/day, measured according to ASTM D-3985 and DIN 53380, Part 3.

13. The pneumatic tire carcass (301) of claim 11, wherein the air-blocking layer (391) has an elongation to break of 50-400%.

14. The pneumatic tire carcass (301) of claim 11, wherein the stabilizing fabric (312) is selected from a woven fabric, a knit fabric, a non-woven fabric, and a unidirectional fabric.

15. A process of forming a pneumatic tire carcass (301) having a radial direction and a circumferential direction comprising:
(i) forming at least one ply of stabilizing fabric (312) which has a machine and cross-machine direction, and comprises a plurality of reinforcing yarns (311) in the cross-machine direction;
(ii) embedding the stabilizing fabric (312) into an air-blocking layer (391) comprising a polymer selected from polyolefin, ethyl vinyl acetate, polyisobutalyene or polyurethane, polyamide, polyester, co-polymers of PA and PES, dynamically vulcanized alloy resin, co-polymers, and mixtures thereof;
(iii) arranging the embedded stabilizing fabric (312) in the carcass (301) such that the reinforcing yarns (311) are arranged in the radial direction of the carcass (301).

## Patentansprüche

1. Luftreifenkarkasse (301) mit einer radialen Richtung und einer Umfangsrichtung, worin die Reifenkarkasse (301) umfasst:
(i) mindestens eine Lage stabilisierendes Gewebe (312), welches
- eine Vielzahl Verstärkungsgarne (311) umfasst, die monoaxial gezogene Bandelemente (10) umfassen, welche einen rechteckigen Querschnitt, eine obere Oberfläche (12a) und eine untere Oberfläche (12b) aufweisen, worin die Bandelemente (10) mindestens eine erste Schicht (12) umfassen, die ein Polymer umfasst, das aus Polyamid, Polyester, Copolymeren und Gemischen davon ausgewählt ist und ein Reckverhältnis von mindestens 5, einen Modul von mindestens 2 GPa und eine Dichte von mindestens 0,85 g/cm³ aufweist und
- innerhalb der Karkasse (301) so angeordnet ist, dass die Verstärkungsgarne (311) in der radialen Richtung der Karkasse (301) angeordnet sind; und
(ii) eine luftblockierende Schicht (391), die an dem stabilisierenden Gewebe (312) angebracht ist.

2. Luftreifenkarkasse (301) gemäß Anspruch 1, worin die luftblockierende Schicht (391) eine Luftdurchlässigkeit von 50-100 cm³/m²/Tag aufweist, gemessen gemäß ASTM D-3985 und DIN 53380, Teil 3.

3. Luftreifenkarkasse (301) gemäß Anspruch 1, worin die luftblockierende Schicht (391) eine Bruchdehnung von 50-400% aufweist.

4. Luftreifenkarkasse (301) gemäß Anspruch 1, worin das stabilisierende Gewebe (312) ferner mindestens eine erste Vielzahl von Garnelementen in Maschinenrichtung umfasst, die (i) von einer relativ geringeren Zähigkeit als die Verstärkungsgarne (311) sind und (ii) eine Bruchdehnung von 30-200% aufweisen.

5. Luftreifenkarkasse (301) gemäß Anspruch 1, worin das stabilisierende Gewebe (312) ausgewählt ist aus einem gewebten Gewebe, einem Strickgewebe, einem Vliesstoff und einem unidirektionalen Gewebe.

6. Luftreifenkarkasse (301) gemäß Anspruch 1, worin das stabilisierende Gewebe (312) zumindest teilweise in die luftblockierende Schicht (391) eingebettet ist.

7. Verfahren zum Bilden einer Luftreifenkarkasse (301) mit einer radialen Richtung und einer Umfangsrichtung, umfassend:
(i) Bilden mindestens einer Lage stabilisierendes Gewebe (312), welches
- eine Maschinen- und eine Quermaschinenrichtung aufweist und
- eine Vielzahl Verstärkungsgarne (311) in der Quermaschinenrichtung umfasst, wobei die Verstärkungsgarne (311) monoaxial gezogene Bandelemente (10) umfassen, welche einen rechteckigen Querschnitt, eine obere Oberfläche (12a) und eine untere Oberfläche (12b) aufweisen, worin die Bandelemente (10) mindestens eine erste Schicht (12) umfassen, die ein Polymer umfasst, das aus Polyamid, Polyester, Copolymeren und Gemischen davon ausgewählt ist und ein Reckverhältnis von mindestens 5, einen Modul von mindestens 2 GPa und eine Dichte von mindestens 0,85 g/cm³ aufweist und
(ii) Anbringen einer luftblockierenden Schicht (391), die eine Luftdurchlässigkeit von 50-100 cm³/m²/Tag oder von 100-200 cm³/m²/Tag aufweist, gemessen gemäß ASTM D-3985 und DIN 53380, Teil 3, an dem stabilisierenden Gewebe (312); und
(iii) Anordnen des stabilisierenden Gewebes (312) und der luftblockierenden Schicht (391) in der Karkasse (301), dass die Verstärkungsgarne (311) in der radialen Richtung der Karkasse (301) angeordnet sind.

8. Verfahren gemäß Anspruch 7, worin die luftblockierende Schicht (391) eine Luftdurchlässigkeit von 50-100 cm³/m²/Tag aufweist.

9. Verfahren gemäß Anspruch 7, worin die luftblockierende Schicht (391) eine Bruchdehnung von 50-400% aufweist.

10. Verfahren gemäß Anspruch 7, worin das stabilisierende Gewebe (312) ausgewählt ist aus einem gewebten Gewebe, einem Strickgewebe, einem Vliesstoff und einem unidirektionalen Gewebe.

11. Luftreifenkarkasse (301) mit einer radialen Richtung und einer Umfangsrichtung, worin die Reifenkarkasse (301) umfasst:
- mindestens eine Lage stabilisierendes Gewebe (312), das eine Vielzahl Verstärkungsgarne (311) umfasst und innerhalb der Karkasse (301) so angeordnet ist, dass die Verstärkungsgarne (311) in der Radialrichtung der Karkasse (301) angeordnet sind; und
- eine luftblockierende Schicht (391), die ein Polymer umfasst, das ausgewählt ist aus Polyolefin, Ethylvinylacetat, Polyisobutalyen oder Polyurethan, Polyamid, Polyester, Copolymeren aus PA und PES, dynamisch vulkanisiertem Legierungsharz, Copolymeren und Gemischen davon;
worin das stabilisierende Gewebe (312) in die luftblockierende Schicht (391) eingebettet ist.

12. Luftreifenkarkasse (301) gemäß Anspruch 11, worin die luftblockierende Schicht (391) eine Luftdurchlässigkeit von 50-100 cm³/m²/Tag aufweist, gemessen gemäß ASTM D-3985 und DIN 53380, Teil 3.

13. Luftreifenkarkasse (301) gemäß Anspruch 11, worin die luftblockierende Schicht (391) eine Bruchdehnung von 50-400% aufweist.

14. Luftreifenkarkasse (301) gemäß Anspruch 11, worin das stabilisierende Gewebe (312) ausgewählt ist aus einem gewebtem Gewebe, einem Strickgewebe, einem Vliesstoff und einem unidirektionalen Gewebe.

15. Verfahren zum Bilden einer Luftreifenkarkasse (301) mit einer radialen Richtung und einer Umfangsrichtung, umfassend:
(i) Bilden mindestens einer Lage stabilisierendes Gewebe (312), das eine Maschinen- und eine Quermaschinenrichtung aufweist und eine Vielzahl Verstärkungsgarne (311) in der Quermaschinenrichtung umfasst,
(ii) Einbetten des stabilisierenden Gewebes (312) in eine luftblockierende Schicht (391), die ein Polymer umfasst, das ausgewählt ist aus Polyolefin, Ethylvinylacetat, Polyisobutalyen oder Polyurethan, Polyamid, Polyester, Copolymeren aus PA und PES, dynamisch vulkanisiertem Legierungsharz, Copolymeren und Gemischen davon;
(iii) Anordnen des eingebetteten, stabilisierenden Gewebes (312) in der Karkasse (301), so dass die Verstärkungsgarne in der radialen Richtung der Karkasse (301) angeordnet sind.

## Revendications

1. Carcasse de bandage pneumatique (301) ayant une direction radiale et une direction circonférentielle, dans laquelle la carcasse de bandage (301) comprend :
(i) au moins un pli de tissu de stabilisation (312) qui
- comprend une pluralité de fils de renforcement (311) comprenant des éléments de bande étirés monoaxialement (10) ayant une section transversale rectangulaire, une surface supérieure (12a), et une surface inférieure (12b),
dans laquelle les éléments de bande (10) comprennent au moins une première couche (12) comprenant un polymère choisi parmi un polyamide, un polyester, des copolymères et des mélanges de ceux-ci, et ayant un rapport d'étirement d'au moins 5, un module d'au moins 2 GPa, et une densité d'au moins 0,85 g/cm³, et
- est déposé à l'intérieur de la carcasse (301) de telle sorte que les fils de renforcement (311) sont arrangés dans la direction radiale de la carcasse (301) ; et
(ii) une couche bloquant l'air (391) attachée au tissu de stabilisation (312).

2. La carcasse de bandage pneumatique (301) de la revendication 1, dans laquelle la couche bloquant l'air (391) a une perméabilité à l'air de 50-100 cm³/m²/jour, mesurée selon ASTM D-3985 et DIN 53380, Partie 3.

3. La carcasse de bandage pneumatique (301) de la revendication 1, dans laquelle la couche bloquant l'air (391) a un allongement à la rupture de 50-400%.

4. La carcasse de bandage pneumatique (301) de la revendication 1, dans laquelle le tissu de stabilisation (312) comprend en outre au moins une première pluralité d'éléments de fils en direction machine qui (i) sont de ténacité relativement plus faible que les fils de renforcement (311), et (ii) ont un allongement à la rupture de 30-200%.

5. La carcasse de bandage pneumatique (301) de la revendication 1, dans laquelle le tissu de stabilisation (312) est choisi parmi un tissu tissé, un tissu tricoté, un tissu non tissé et un tissu unidirectionnel.

6. La carcasse de bandage pneumatique de la revendication 1, dans laquelle le tissu de stabilisation (312) est au moins partiellement enchevêtré dans la couche bloquant l'air (391).

7. Procédé de formation d'une carcasse de bandage pneumatique (301) ayant une direction radiale et une direction circonférentielle comprenant :
(i) la formation d'au moins un pli de tissu de stabilisation (312) qui
- a une direction machine et machine-transversale, et
- comprend une pluralité de fils de renforcement (311) dans la direction machine-transversale, lesquels fils de renforcement (311) comprennent des éléments de bande étirés monoaxialement (10) ayant une section transversale rectangulaire, une surface supérieure (12a), et une surface inférieure (12b),
dans laquelle les éléments de bande (10) comprennent au moins une première couche (12) comprenant un polymère choisi parmi un polyamide, un polyester, des copolymères et des mélanges de ceux-ci, et ayant un rapport d'étirement d'au moins 5, un module d'au moins 2 GPa, et une densité d'au moins 0,85 g/cm³,
(ii) l'attachement d'une couche bloquant l'air (391) ayant une perméabilité à l'air de 50-100 cm³/m²/jour ou de 100-200 cm³/m²/jour, mesurée selon ASTM D-3985 et DIN 53380, Partie 3, au tissu de stabilisation (312) ; et
(iii) l'arrangement du tissu de stabilisation (312) et de la couche bloquant l'air (391) dans la carcasse (301) de telle sorte que les fils de renforcement (311) sont arrangés dans la direction radiale de la carcasse (301).

8. Le procédé de la revendication 7, dans lequel la couche bloquant l'air (391) a une perméabilité à l'air de 50-100 cm³/m²/jour.

9. Le procédé de la revendication 7, dans lequel la couche bloquant l'air (391) a un allongement à la rupture de 50-400%.

10. Le procédé de la revendication 7, dans lequel le tissu de stabilisation (312) est choisi parmi un tissu tissé, un tissu tricoté, un tissu non tissé, et un tissu unidirectionnel.

11. Carcasse de bandage pneumatique (301) qui a une direction radiale et une direction circonférentielle, dans laquelle la carcasse de bandage (301) comprend :
- au moins un pli de tissu de stabilisation (312) comprenant une pluralité de fils de renforcement (311) et étant disposé à l'intérieur de la carcasse (301) de telle sorte que les fils de renforcement (311) sont arrangés dans la direction radiale de la carcasse (301) ; et,
- une couche bloquant l'air (391) comprenant un polymère choisi parmi une polyoléfine, l'acétate d'éthyle vinyle, le polyisobutalyène ou le polyuréthane, un polyamide, un polyester, des copolymères de PA ou PES, une résine alliage vulcanisée dynamiquement, des copolymères, et des mélanges de ceux-ci;
dans laquelle le tissu de stabilisation (312) est enchevêtré dans la couche bloquant l'air (391).

12. La carcasse de bandage pneumatique (301) de la revendication 11, dans laquelle la couche bloquant l'air (391) a une perméabilité à l'air de 50-100 cm³/m²/jour, mesurée selon ASTM D-3985 et DIN 53380, Partie 3.

13. La carcasse de bandage pneumatique (301) de la revendication 11, dans laquelle la couche bloquant l'air (391) a un allongement à la rupture de 50-400%.

14. La carcasse de bandage pneumatique (301) de la revendication 11, dans laquelle le tissu de stabilisation (312) est choisi parmi un tissu tissé, un tissu tricoté, un tissu non tissé et un tissu unidirectionnel.

15. Procédé de formation d'une carcasse de bandage pneumatique (301) ayant une direction radiale et une direction circonférentielle comprenant :
(i) la formation d'au moins un pli de tissu de stabilisation (312) qui a une direction machine et machine-transversale, et comprend une pluralité de fils de renforcement (311) dans la direction machine-transversale ;
(ii) l'enchevêtrement du tissu de stabilisation (312) dans une couche bloquant l'air (391) comprenant un polymère choisi parmi une polyoléfine, l'acétate d'éthyle vinyle, le polyisobutalyène ou le polyuréthane, un polyamide, un polyester, des copolymères de PA ou PES, une résine alliage vulcanisée dynamiquement, des copolymères, et des mélanges de ceux-ci ;
(iii) l'arrangement du tissu de stabilisation enchevêtré (312) et de la couche bloquant l'air (391) dans la carcasse (301) de telle sorte que les fils de renforcement (311) sont arrangés dans la direction radiale de la carcasse (301).
